(19) Europäisches Patentamt / European Patent Office / Office européen des brevets

(11) **EP 3 379 615 B1**

(12) **EUROPEAN PATENT SPECIFICATION**

(45) Date of publication and mention
of the grant of the patent:
**21.08.2019   Bulletin 2019/34**

(21) Application number: **17001571.3**

(22) Date of filing: **21.09.2017**

(51) Int Cl.:
**H01M 4/136** (2010.01)     **C01B 25/45** (2006.01)
**H01M 4/36** (2006.01)     **H01M 4/58** (2010.01)
**H01M 4/62** (2006.01)     **H01M 10/0525** (2010.01)
**H01M 4/02** (2006.01)

(54) **ELECTRODE MATERIAL FOR LITHIUM-ION SECONDARY BATTERY AND LITHIUM-ION SECONDARY BATTERY**

ELEKTRODENMATERIAL FÜR EINE LITHIUM-IONEN-SEKUNDÄRBATTERIE SOWIE LITHIUM-IONEN-SEKUNDÄRBATTERIE

MATÉRIAU D'ÉLECTRODE POUR BATTERIE SECONDAIRE AU LITHIUM-ION ET BATTERIE SECONDAIRE AU LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **24.03.2017   JP 2017059501**

(43) Date of publication of application:
**26.09.2018   Bulletin 2018/39**

(73) Proprietor: **Sumitomo Osaka Cement Co., Ltd.**
**Tokyo 102-8465 (JP)**

(72) Inventors:
• **Yasumiishi, Hirofumi**
  **Tokyo, 1028465 (JP)**
• **Yamaya, Ryuuta**
  **Tokyo, 1028465 (JP)**

(74) Representative: **Müller-Boré & Partner**
**Patentanwälte PartG mbB**
**Friedenheimer Brücke 21**
**80639 München (DE)**

(56) References cited:
EP-A1- 2 778 126     EP-A1- 3 076 460
US-A1- 2011 027 651     US-A1- 2013 224 595
US-A1- 2015 380 734

**Description**

The present invention relates to an electrode material for a lithium-ion secondary battery and a lithium-ion secondary battery including an electrode formed using the electrode material.

Lithium-ion secondary batteries have a higher energy density and a higher power density than lead batteries and nickel-hydrogen batteries and are used in a variety of applications such as small-size electronic devices such as smartphones, domestic backup power supply, and electric tools. In addition, attempts are made to put high-capacity lithium-ion secondary batteries into practical use for recyclable energy storage such as photovoltaic power generation and wind power generation.

Lithium-ion secondary batteries include a cathode, an anode, and a separator. As electrode materials that constitute cathodes, lithium-containing metal oxides having properties capable of reversibly intercalating and deintercalating lithium ions such as lithium cobalt oxide ($LiCoO_2$), lithium manganese oxide ($LiMn_2O_4$), and lithium iron phosphate ($LiFePO_4$) are used, and studies are made in order for improvement from the viewpoint of an increase in the capacity of batteries, the extension of service lives, improvement of safety, and cost reduction.

Lithium iron phosphate ($LiFePO_4$) as the electrode material contains iron which is an abundant and inexpensive resource and is thus a material the cost of which can be easily reduced. Lithium iron phosphate does not emit oxygen at high temperatures due to the strong covalent bond between phosphorus and oxygen and thus has outstanding safety, which provides lithium iron phosphate with excellent characteristics that oxide-based cathode materials represented by lithium cobalt oxide do not have.

On the other hand, lithium iron phosphate has low Li ion diffusivity and low electron conductivity and thus has worse input and output characteristics than oxide-based cathode materials. This characteristic difference becomes more significant as the operation temperature of batteries becomes lower, and thus lithium iron phosphate has been considered to be inappropriate for in-vehicle applications such as hybrid vehicles for which high input and output characteristics are required at low-temperature regions.

$LiMPO_4$ (M represents a metal element) having an olivine structure which is represented by lithium iron phosphate has low Li ion diffusivity and low electron conductivity, and thus it is possible to improve the charging and discharging characteristics by miniaturizing $LiMPO_4$ primary particles and coating the surfaces of the respective primary particles with a conductive carbonaceous film.

On the other hand, since the miniaturized $LiMPO_4$ has a large specific surface area, an increase in the viscosity of an electrode mixture slurry or a large amount of a binder is required, and thus it is usual to improve the properties of the electrode mixture slurry by turning the primary particles coated with a carbonaceous film into secondary particles by means of granulation.

For example, as an electrode material, Japanese Patent No. 5343347 discloses a cathode active material for a lithium secondary battery in which primary particle crystals agglomerate together and thus form spherical secondary particles and which includes parent particles which have pores on the surfaces and the inside of the secondary particles and are made of a lithium nickel manganese-based complex oxide and conductive fine powder loaded into some of the pores in the parent particles . In addition, Japanese Laid-open Patent Publication No. 2015-018678 discloses a cathode active material for a lithium secondary battery including particles having pores in secondary particles.

US2015380734, US2013224595, and EP2778126 disclose an electrode material for a lithium-ion secondary battery comprising a phosphate.

Electrode mixture layers are formed by applying, drying, and calendering an electrode slurry obtained by mixing an electrode material, a conductive auxiliary agent, a binder, or the like on an aluminum current collector. However, in the electrode materials described in Japanese Patent No. 5343347 and Japanese Laid-open Patent Publication No. 2015-018678, since irregular secondary particles or secondary particles including pores (hollow secondary particles) are present, the electrode structure becomes uneven, and the Li ion conductivity and the electron conductivity decrease. In addition, excessive calendering is required in order to make the electrode structure uniform, and the peeling of conductive carbonaceous films due to the collapse of the secondary particles or the dropping of the electrode mixture layer from the aluminum current collector also causes the degradation of battery characteristics.

As described above, improvement of the charging and discharging characteristics essentially requires improvement of the conductivity of not only electrode materials but also electrode mixture layers constituting electrodes.

The present invention has been made in consideration of the above-described circumstances, and an object of the present invention is to provide an electrode material for a lithium-ion secondary battery capable of decreasing the volume resistance value of an electrode mixture layer and the interface resistance value between the electrode mixture layer and an aluminum current collector and a lithium-ion secondary battery having improved charging and discharging characteristics.

The present inventors and the like carried out intensive studies in order to achieve the above-described object and found that the object can be achieved by means of the following inventions.

[1] An electrode material for a lithium-ion secondary battery including: an electrode active material made of a transition metal lithium phosphate compound having an olivine structure and a carbonaceous film that coats the electrode active material, in which a specific surface area of the electrode active material is 10 m$^2$/g or more and 25 m$^2$/g or less, an average particle diameter of spherical secondary particles formed by granulating primary particles of the electrode active material is 0.5 $\mu$m or more and 15 $\mu$m or less, regarding a content of spherical secondary particles having a degree of circularity, which is measured using a flow-type particle image analyzer, in a range of 0.90 or more and 0.95 or less, a proportion of the number of the spherical secondary particles in the total number of all of single particles and spherical secondary particles present during the measurement of the degree of circularity is 18% or more, and in which, among peaks appearing at 1 $\mu$m or less in a pore size distribution chart of the electrode active material measured using a mercury porosimeter, a micropore diameter of a peak top of a peak having the largest pore volume is 0.03 $\mu$m or more and 0.14 $\mu$m or less.

[2] The electrode material for a lithium-ion secondary battery according to [1], in which the transition metal lithium phosphate compound having an olivine structure is an electrode active material represented by General Formula (1),

$$\mathrm{Li}_x\mathrm{A}_y\mathrm{D}_z\mathrm{PO}_4 \qquad (1)$$

(here, A represents at least one element selected from the group consisting of Co, Mn, Ni, Fe, Cu, and Cr, D represents at least one element selected from the group consisting of Mg, Ca, Sr, Ba, Ti, Zn, B, Al, Ga, In, Si, Ge, Sc, and Y, $0.9<x<1.1$, $0<y\leq1$, $0\leq z<1$, and $0.9<y+z<1.1$).

[3] The electrode material for a lithium-ion secondary battery according to [1] or [2], in which, in a case in which a cathode mixture layer including the electrode material, a conductive auxiliary agent, and a binding agent in a weight ratio (the electrode material:the conductive auxiliary agent:the binding agent) of 90:5:5 is calendered on a 30 $\mu$m-thick aluminum current collector at a total applied pressure of 5 t/250 mm, an interface resistance value between the calendered cathode mixture layer and the aluminum current collector is 1 $\Omega\cdot$cm$^2$ or less, and a volume resistance value of the calendered cathode mixture layer is 5.0 $\Omega\cdot$cm or less.

[4] The electrode material for a lithium-ion secondary battery according to [3], in which a particle diameter (D90) at which a cumulative percentage of the electrode material is 90% in a cumulative particle size distribution is 15 $\mu$m or less, and, in a case in which the cathode mixture layer including the electrode material, the conductive auxiliary agent, and the binding agent in a weight ratio (the electrode material:the conductive auxiliary agent:the binding agent) of 90:5:5 is calendered on the 30 $\mu$m-thick aluminum current collector at a total applied pressure of 5 t/250 mm, a ratio (the interface resistance value/D90) of the interface resistance value between the calendered cathode mixture layer and the aluminum current collector to the D90 is 0.1 $\Omega\cdot$cm$^2$/$\mu$m or less, and a ratio (the volume resistance value/D90) of the volume resistance value of the calendered cathode mixture layer to the D90 is 0.10 $\Omega\cdot$cm/$\mu$m or more and 0.60 $\Omega\cdot$cm/$\mu$m or less.

[5] The electrode material for a lithium-ion secondary battery according to [3] or [4], in which an oil absorption amount of the electrode material, for which N-methyl-2-pyrrolidone is used, is 50 ml/100 g or less.

[6] The electrode material for a lithium-ion secondary battery according to any one of [3] to [5], in which, in a case in which the cathode mixture layer including the electrode material, the conductive auxiliary agent, and the binding agent in a weight ratio (the electrode material:the conductive auxiliary agent:the binding agent) of 90:5:5 is calendered on the 30 $\mu$m-thick aluminum current collector at a total applied pressure of 5 t/250 mm, an electrode density of the calendered cathode mixture layer is 1.4 g/cm$^3$ or more.

[7] A lithium-ion secondary battery including: a cathode, an anode, and an electrolyte, in which the cathode includes a cathode mixture layer formed using the electrode material according to any one of [1] to [6], and a volume resistance value of the cathode mixture layer is 5.0 $\Omega\cdot$cm or less.

[8] The lithium-ion secondary battery according to [7], in which an electrode density of the calendered cathode mixture layer is 1.4 g/cm$^3$ or more.

According to the present invention, it is possible to provide an electrode material for a lithium-ion secondary battery capable of decreasing the volume resistance value of electrode mixture layers and the interface resistance value between the electrode mixture layers and aluminum current collectors and a lithium-ion secondary battery having improved charging and discharging characteristics.

An embodiment of an electrode material for a lithium-ion secondary battery of the present invention will be described.

Meanwhile, the present embodiment is a specific description for easier understanding of the gist of the present invention and, unless particularly otherwise described, does not limit the present invention.

Electrode material for lithium-ion secondary battery

An electrode material for a lithium-ion secondary battery of the present embodiment includes an electrode active material made of a transition metal lithium phosphate compound having an olivine structure and a carbonaceous film that coats the electrode active material, the specific surface area of the electrode active material is 10 m$^2$/g or more and 25 m$^2$/g or less, the average particle diameter of spherical secondary particles formed by granulating the primary particles of the electrode active material is 0.5 $\mu$m or more and 15 $\mu$m or less, and, regarding the content of spherical secondary particles having a degree of circularity, which is measured using a flow-type particle image analyzer, in a range of 0.9 or more and 0.95 or less, the proportion of the number of the spherical secondary particles in the total number of all of single particles and spherical secondary particles present during the measurement of the degree of circularity is 18% or more. Moreover, among peaks appearing at 1 $\mu$m or less in a pore size distribution chart of the electrode active material measured using a mercury porosimeter, a micropore diameter of a peak top of a peak having the largest pore volume is 0.03 $\mu$m or more and 0.14 $\mu$m or less.

The electrode active material that is used in the present invention is made of a transition metal lithium phosphate compound having an olivine structure. The transition metal lithium phosphate compound having an olivine structure is preferably an electrode active material represented by General Formula (1) from the viewpoint of a high discharge capacity and a high energy density.

$$Li_xA_yD_zPO_4 \qquad (1)$$

(Here, A represents at least one element selected from the group consisting of Co, Mn, Ni, Fe, Cu, and Cr, D represents at least one element selected from the group consisting of Mg, Ca, Sr, Ba, Ti, Zn, B, Al, Ga, In, Si, Ge, Sc, and Y, 0.9<x<1.1, 0<y≤1, 0≤z<1, and 0.9<y+z<1.1).

Here, A is preferably Co, Mn, Ni, or Fe, and more preferably Fe.

D is preferably Mg, Ca, Sr, Ba, Ti, Zn, or Al. In a case in which the electrode active material includes these elements, it is possible to produce cathode mixture layers capable of realizing a high discharge potential and favorable safety. In addition, these elements are resources having an abundant amount and are thus preferred as materials to be selected.

The specific surface area of the electrode active material is 10 m$^2$/g or more and 25 m$^2$/g or less, preferably 10 m$^2$/g or more and 18 m$^2$/g or less, and more preferably 10 m$^2$/g or more and 15 m$^2$/g or less. When the specific surface area is less than 10 m$^2$/g, the Li ion diffusion resistance or the electron migration resistance among the primary particles of the electrode material for a lithium-ion secondary battery increases. Therefore, the internal resistance increases, and the output characteristics deteriorate. On the other hand, when the specific surface area exceeds 25 m$^2$/g, the specific surface area of the electrode material for a lithium-ion secondary battery increase, and thus the mass of necessary carbon increases, and the battery capacity of lithium- ion secondary batteries per unit mass of the electrode material for a lithium-ion secondary battery decreases more than necessary.

Meanwhile, the specific surface areas can be measured using a specific surface area meter (for example, manufactured by MicrotracBEL Corp., trade name: BELSORP-mini,) and the BET method.

The average particle diameter of the primary particles of the electrode active material is preferably 500 nm or less, more preferably 10 nm or more and 400 nm or less, still more preferably 20 nm or more and 300 nm or less, and far still more preferably 20 nm or more and 200 nm or less. When the average particle diameter of the primary particles of the electrode active material is 500 nm or less, it is possible to suppress an increase in the Li ion diffusion resistance or the electron migration resistance among the primary particles of the electrode active material. As a result, lithium-ion secondary batteries for which the electrode material for a lithium-ion secondary material of the present embodiment is used are capable of increasing discharge capacities in high-speed charge and discharge. Inaddition, when the average particle diameter of the primary particles is 10 nm or more, an increase in the mass of necessary carbon caused by an increase in the specific surface area of theprimaryparticles of the electrode active material is suppressed, and it is possible to suppress a decrease in charge and discharge capacities per unit mass of the electrode material. In addition, it becomes easy to uniformly coat the surfaces of the primary particles of the electrode active material with the carbonaceous film. As a result, lithium-ion secondary batteries for which the electrode material for a lithium-ion secondary material of the present embodiment is used have an increased discharge capacity in high-speed charge and discharge and are capable of realizing sufficient charge and discharge performance.

Here, the average particle diameter is a volume-average particle diameter. The average particle diameter of the primary particles can be obtained by randomly selecting 100 primary particles, measuring the particle diameters (long diameters) of the respective primary particles using a scanning electron microscope (SEM), and obtaining an average value thereof.

In addition, the average particle diameter of the spherical secondary particles formed by granulating the primary particles of the electrode active material is 0.5 $\mu$m or more and 15 $\mu$m or less and preferably 1.0 $\mu$m or more and 10

μm or less. When the average particle diameter of the spherical secondary particles is less than 0.5 μm, a large amount of a binding agent and a conductive auxiliary agent are required to prepare electrode material paste for a lithium-ion secondary battery by mixing the electrode material, the conductive auxiliary agent, a binder resin (the binding agent), and a solvent, and the battery capacities of lithium-ion secondary batteries per unit mass of the cathode mixture layer for a lithium-ion secondary battery decrease. On the other hand, when the average particle diameter of the spherical secondary particles exceeds 15 μm, the dispersibility and uniformity of the conductive auxiliary agent or the binding agent in the cathode mixture layer degrade. As a result, the discharge capacities in high-speed charge and discharge of lithium-ion secondary batteries for which the electrode material for a lithium-ion secondary battery of the present embodiment is used become insufficient.

Meanwhile, in the present embodiment, granulated particles and agglomerated particles other than primary particles that are singly present (present without agglomerating) will be all considered as secondary particles or spherical secondary particles.

Here, the average particle diameter is a volume-average particle diameter. The average particle diameter of the spherical secondary particles can be measured using a laser diffraction and scattering particle size distribution measurement instrument or the like. In addition, the average particle diameter may be obtained by randomly selecting 100 spherical secondary particles, measuring the long diameters and short diameters of the respective spherical secondary particles using a scanning electron microscope (SEM), and obtaining an average value thereof . Meanwhile, in the present invention, the particle diameters of the spherical secondary particles of the electrode active material coated with the carbonaceous film (hereinafter, also referred to as "carbonaceous coated electrode active material") are obtained using the above-described method, whereby the average particle diameter of the spherical secondary particles of the electrode active material can be obtained.

Regarding the content of the spherical secondary particles having a degree of circularity in a range of 0.90 to 0.95, the proportion of the number of the spherical secondary particles in the total number of all of single particles and the spherical secondary particles present during the measurement of the degree of circularity is 18% or more, preferably 19% or more, and more preferably 20% or more. When the proportion is less than 18%, the electrode structure becomes uneven, and there is a concern that the Li ion conductivity and the electron conductivity may decrease.

Here, "the degree of circularity" refers to a value indicating how close a shape is to a circular shape, and the maximum value of 1.0 indicates a true circle. The degree of circularity can be obtained using Expression (I).

$$4\pi S^2 / L^2 \qquad (I)$$

Here, in Expression (I), S represents the area of the spherical secondary particle, and L represents the circumferential length of the spherical secondary particle.

Among peaks appearing at 1 μm or less in a pore size distribution chart of the electrode active material measured using a mercury porosimeter, the micropore diameter of the peak top of the peak having the largest pore volume is 0.03 μm or more and 0.14 μm or less and preferably 0.07 μm or more and 0.095 μm or less.

When the micropore diameter of the peak top appearing at 1 μm or less is 0.03 μm or more and 0.14 μm or less, the soaking of electrolytic solutions becomes favorable, ion resistance can be decreased, the number of contact points between active material particles is increased, and it is possible to improve the electron conductivity of micro regions.

The carbonaceous film is a film intended to impart desired electron conductivity to the primary particles.

The thickness of the carbonaceous film is preferably 0.5 nm or more and 5.0 nm or less and more preferably 1.0 nm or more and 3.0 nm or less.

When the thickness of the carbonaceous film is 0.5 nm or more, the thickness of the carbonaceous film becomes too thin, and it is possible to form films having a desired resistance value. As a result, the conductivity improves, and it is possible to ensure conductivity suitable for electrode materials. On the other hand, when the thickness of the carbonaceous film is 5.0 nm or less, the degradation of battery activity, for example, the battery capacity of the electrode material per unit mass can be suppressed.

The amount of carbon included in the carbonaceous coated electrode active material is preferably 0.5% by mass or more and 5.0% by mass or less and more preferably 0.8% by mass or more and 2.5% by mass or less.

When the amount of carbon is 0.5% by mass or more, it is possible to ensure conductivity suitable for electrode materials, the discharge capacity at a high charge-discharge rate increases in a case in which lithium-ion secondary batteries are formed, and it is possible to realize sufficient charge and discharge rate performance. On the other hand, when the amount of carbon is 5. 0% by mass or less, the amount of carbon becomes too great, and it is possible to suppress the battery capacity of lithium-ion secondary batteries per unit mass of the electrode material for a lithium-ion secondary battery decreasing more than necessary.

The coating ratio of the carbonaceous film to inorganic particles is preferably 60% or more and more preferably 80% or more and 95% or less. When the coating ratio of the carbonaceous film is 60% or more, the coating effect of the carbonaceous film can be sufficiently obtained.

The film thickness of the carbonaceous film can be measured using a transmission electron microscope.

The density of the carbonaceous film, which is calculated using the carbon component of the carbonaceous film, the average film thickness of the carbonaceous film, the coating ratio of the carbonaceous film, and the specific surface area of the electrode material, is preferably 0.3 $g/cm^3$ or more and 1.5 $g/cm^3$ or less and more preferably 0.4 $g/cm^3$ or more and 1.0 $g/cm^3$ or less.

Here, the reasons for limiting the density of the carbonaceous film in the above-described range are as described below. When the density of the carbonaceous film, which is calculated using the carbon component of the carbonaceous film, is preferably 0.3 $g/cm^3$ or more, the carbonaceous film exhibits sufficient electron conductivity. On the other hand, when the density of the carbonaceous film is 1.5 $g/cm^3$ or less, the amount of the fine crystals of graphite, which is made of a lamellar structure, in the carbonaceous film is small, and thus the fine crystals of graphite do not cause steric hindrance during the diffusion of lithium ions in the carbonaceous film. Therefore, there is no case in which the lithium ion migration resistance increases. As a result, the internal resistance of lithium-ion secondary batteries does not increase, and voltage drop does not occur at a high charge-discharge rate of lithium-ion secondary batteries.

The carbonaceous coated electrode active material is preferably secondary particles having particle shapes that do not easily deform due to electrode calendering since it is possible to make the electrode structure uniform. When the electrode structure is uniform, not only do the Li ion conductivity and the electron conductivity improve, but the calendering pressure during the production of electrodes is also suppressed, and thus it is possible to suppress the peeling of the carbonaceous film due to the collapse of the carbonaceous coated electrode active material and prevent the dropping of the electrode mixture layer from the aluminum current collector. Therefore, it is possible to suppress the degradation of battery characteristics.

The particle diameter (D90) at which the cumulative percentage is 90% in the cumulative particle size distribution of the electrode material for a lithium-ion secondary battery of the present embodiment is preferably 17 $\mu$m or less, more preferably 16 $\mu$m or less, and still more preferably 15 $\mu$m or less. When D90 is 17 $\mu$m or less, it is possible to suppress the deformation of the secondary particles during electrode calendering. In addition, the lower limit value of D90 is not particularly limited, but is preferably 4.0 $\mu$m or less, more preferably 6.0 $\mu$m or less, and still more preferably 7.0 $\mu$m or less. Here, the cumulative particle size distribution refers to a volume-based cumulative particle size distribution. The cumulative particle size distribution of the electrode material can be measured using a laser diffraction and scattering particle size distribution measurement instrument or the like.

The oil absorption amount of the electrode material, for which N-methyl-2-pyrrolidone (NMP) is used, is preferably 50 ml/100 g or less, more preferably 48 ml/100 g or less, and still more preferably 45 ml/100 g or less. When the NMP oil absorption amount is 50 ml/100 g or less, an increase in the viscosity of the electrode paste is suppressed, and it becomes easy to diffuse the conductive auxiliary agent or the binding agent. Meanwhile, the lower limit value of the oil absorption amount for which NMP is used is not particularly limited, but is preferably, for example, 20 ml/100 g.

Meanwhile, the NMP oil absorption amount can be measured using a method described in the examples.

In a case in which the cathode mixture layer including the electrode material, the conductive auxiliary agent, and the binding agent in a weight ratio (the electrode material:the conductive auxiliary agent:the binding agent) of 90:5:5 is calendered on the 30 $\mu$m-thick aluminum current collector at a total applied pressure of 5 t/250 mm, the electrode material for a lithium-ion secondary battery of the present embodiment enables the setting of the interface resistance value between the calendered cathode mixture layer and the aluminum current collector to preferably 1.50 $\Omega \cdot cm^2$ or less, more preferably 1.00 $\Omega \cdot cm^2$ or less, still more preferably 0.90 $\Omega \cdot cm^2$ or less, still more preferably 0.80 $\Omega \cdot cm^2$ or less, and far still more preferably 0.70 $\Omega \cdot cm^2$ or less and the setting of the volume resistance value of the calendered cathode mixture layer to preferably 5.0 $\Omega \cdot cm$ or less, more preferably 4.8 $\Omega \cdot cm$ or less, and still more preferably 4.5 $\Omega \cdot cm$ or less. Meanwhile, the lower limit value of the interface resistance value is not particularly limited, but is, for example, 0.005 $\Omega \cdot cm^2$.

Here, the interface resistance value refers to a resistance value of an interface in which two layers are in contact with eachother, and, in the present invention, refers to the resistance value of the interface in which the calendered cathode mixture layer and the aluminum current collector.

Furthermore, under the above-described conditions, it is possible to set the interface resistance value between the calendered cathode mixture layer and the aluminum current collector and the ratio to D90 (the interface resistance value/D90) to preferably 0.1 $\Omega \cdot cm^2/\mu$m or less, more preferably 0.08 $\Omega \cdot cm^2/\mu$m or less, and still more preferably 0.05 $\Omega \cdot cm^2/\mu$m or less. In addition, it is possible to set the volume resistance value of the calendered cathode mixture layer and the ratio to D90 (the volume resistance value/D90) to preferably 0.10 $\Omega \cdot cm/\mu$m or more and 0.60 $\Omega \cdot cm/\mu$m or less, more preferably 0.11 $\Omega \cdot cm/\mu$m or more and 0.50 $\Omega \cdot cm/\mu$m or less, and still more preferably 0.12 $\Omega \cdot cm/\mu$m or more and 0.30 $\Omega \cdot cm/\mu$m or less. Meanwhile, the lower limit value of the interface resistance value/D90 is not particularly limited, but is, for example, 0.05 $\Omega \cdot cm^2/\mu$m.

In a case in which the cathode mixture layer including the electrode material, the conductive auxiliary agent, and the binding agent in a weight ratio (the electrode material:the conductive auxiliary agent:the binding agent) of 90:5:5 is calendered on the 30 $\mu$m-thick aluminum current collector at a total applied pressure of 5 t/250 mm, the electrode material for a lithium-ion secondary battery of the present embodiment enables the setting of the electrode density of the calendered cathode mixture layer to preferably 1.40 g/cm$^3$ or more and more preferably 1.50 g/cm$^3$ or more. Meanwhile, the upper limit value of the electrode density is not particularly limited, but is, for example, 2.5 g/cm$^3$.

Method for manufacturing electrode material

A method for manufacturing an electrode material of the present embodiment has, for example, a manufacturing step of an electrode active material and an electrode active material precursor, a slurry preparation step of preparing a slurry by mixing at least one electrode active material raw material selected from the group consisting of the electrode active material and the electrode active material precursor and water, a granulation step of obtaining a granulated body by adding an agglomeration-maintaining agent to the slurry obtained in the above-described step, and a calcination step of mixing an organic compound which is a carbonaceous film precursor into the granulated body obtained in the above-described step in a dry manner and calcinating the obtained mixture in a non-oxidative atmosphere.

Manufacturing step of electrode active material and electrode active material precursor

The manufacturing step of the electrode active material and the electrode active material precursor is not particularly limited, and, for example, in a case in which the electrode active material and the electrode active material precursor are represented by General Formula (1), it is possible to use a method of the related art such as a solid phase method, a liquid phase method, or a gas phase method. Examples of $Li_xA_yD_zPO_4$ obtained using the above-described method include particulate $Li_xA_yD_zPO_4$ (hereinafter, in some cases, referred to as "$Li_xA_yM_zPO_4$ particles").

The $Li_xA_yD_zPO_4$ particles can be obtained by, for example, hydrothermally synthesizing a slurry-form mixture obtained by mixing a Li source, an A source, a P source, water, and, as necessary, a D source. By means of the hydrothermal synthesis, $Li_xA_yD_zPO_4$ is generated as a precipitate in water. The obtained precipitate may be a precursor of $Li_xA_yD_zPO_4$. In this case, target $Li_xA_yD_zPO_4$ particles are obtained by calcinating the precursor of $Li_xA_yD_zPO_4$.

In this hydrothermal synthesis, a pressure-resistant airtight container is preferably used.

Here, examples of the Li source include lithium salts such as lithiumacetate ($LiCH_3COO$) and lithium chloride ($LiCl$), lithium hydroxide ($LiOH$), and the like. Among these, as the Li source, at least one selected from the group consisting of lithium acetate, lithium chloride, and lithium hydroxide is preferably used.

Examples of the A source include chlorides, carboxylates, hydrosulfates, and the like which include at least one element selected from the group consisting of Co, Mn, Ni, Fe, Cu, and Cr. For example, in a case in which A in $Li_xA_yD_zPO_4$ is Fe, examples of the Fe source include divalent iron salts such as iron (II) chloride ($FeCl_2$), iron (II) acetate ($Fe(CH_3COO)_2$), and iron (II) sulfate ($FeSO_4$). Among these, as the Fe source, at least one selected from the group consisting of iron (II) chloride, iron (II) acetate, and iron (II) sulfate is preferably used.

Examples of the D source include chlorides, carboxylates, hydrosulfates, and the like which include at least one element selected from the group consisting of Mg, Ca, Co, Sr, Ba, Ti, Zn, B, Al, Ga, In, Si, Ge, Sc, and Y.

Examples of the P source include phosphoric acid compounds such as phosphoric acid ($H_3PO_4$), ammonium dihydrogen phosphate ($NH_4H_2PO_4$), diammonium phosphate (($NH_4)_2HPO_4$), and the like. Among these, as the P source, at least one selected from the group consisting of orthophosphonic acid, ammonium dihydrogen phosphate, and diammonium phosphate is preferably used.

Slurry preparation step

In the present step, the electrode active material raw material obtained in the above-described step is dispersed in water, thereby preparing a homogeneous slurry. In the dispersion of the electrode active material raw material in water, it is also possible to add a dispersant thereto. A method for dispersing the electrode active material raw material in water is not particularly limited, and it is preferable to use, for example, a medium stirring-type dispersion device that stirs medium particles at a high rate such as a planetary ball mill, an oscillation ball mill, a bead mill, a paint shaker, or an attritor.

During the preparation of the slurry, the ratio (D90/D10) of the particle diameter (D90) at a cumulative percentage of 90% to the particle diameter (D10) at 10% in the cumulative particle size distribution of the electrode active material raw material in the slurry is preferably controlled to reach 1 or more and 30 or less. When (D90/D10) is set in the above-described range, the particle size distribution of the electrode active material raw material in the slurry becomes broad, the density of particles to be obtained increases, and it is possible to exhibit the effects of the present invention.

Meanwhile, the dispersion conditions of the slurry can be adjusted using, for example, the concentration, stirring rate, stirring time, and the like of the electrode active material raw material in the slurry.

Granulation step

In the present step, a granulated substance is manufactured from the electrode active material raw material in the slurry.

During granulation, the collapse of secondary particles is suppressed by softly agglomerating primary particles in the slurry, and it becomes easy to obtain specimens in which, regarding the content of spherical secondary particles having a degree of circularity in a range of 0.90 or more and 0.95 or less, the proportion of the number of the spherical secondary particles in the total number of all of single particles and spherical secondary particles present during the measurement of the degree of circularity is 18% or more. As a method for accelerating the soft agglomeration of the primary particles and suppressing the collapse of the granulated substance, in the present invention, an agglomeration-maintaining agent is added to the slurry in the granulation step. Here, the agglomeration-maintaining agent refers to a compound that accelerates the agglomeration of the primary particles and maintains the shapes of the secondary particles in which the primary particles agglomerate together.

Examples of the above-described method include a method in which an organic acid such as citric acid, polyacrylic acid, or ascorbic acid is added as the agglomeration-maintaining agent and mixed with the slurry. When the pH of the slurry is decreased due to the organic acid, the agglomeration of the primary particles is accelerated, secondary particles in which the primary particles are more densely packed can be formed after granulation, and it is possible to reinforce the strength of the secondary particles.

The reason for selecting the organic acid is that, in a calcination step described below, it is preferable that the agglomeration-maintaining agent does not remain as an impurity and is carbonized as part of a carbon coating. However, the organic acid does not easily leave carbon, and thus it is difficult to form carbon coatings only with the organic acid, and furthermore, the addition of a large amount of the organic acid is not preferred since it is difficult to form favorable carbon coatings.

In addition, a carbonization catalyst may be used in order to accelerate the carbonatization of the organic compound in the calcination step described below.

The blending amount of the agglomeration-maintaining agent is preferably 0. 1% to 2.0% by mass and more preferably 0.2% to 1.5% by mass of the electrode active material raw material in terms of the solid contents. When the blending amount is set to 0.1% by mass or more, the collapse of the granulated body can be suppressed, and, when the blending amount is set to 2.0% by mass or less, it is possible to suppress an increase in the amount of carbon derived from the agglomeration-maintaining agent. When the amount of carbon is large, there is a concern that the lithium ion conductivity may become poor.

In addition, when the slurry is prepared so that the concentration of the electrode active material raw material in the slurry reaches preferably 15% to 80% by mass and more preferably 20% to 70% by mass, it is possible to obtain spherical secondary particles.

Next, the above-obtained mixture is sprayed and dried in a high-temperature atmosphere in which the atmosphere temperature is the boiling point of the solvent or higher, for example, in the atmosphere at 100°C to 250°C.

Here, when the conditions during the spraying, for example, the concentration, spraying pressure, and rate of the electrode active material raw material in the slurry, and furthermore, the conditions during the drying after the spraying, for example, the temperature-increase rate, the peak holding temperature, the holding time, and the like are appropriately adjusted, a dried substance having an average particle diameter of the spherical secondary particles, which has been described above, in the above-described range can be obtained.

The atmosphere temperature during the spraying and drying have an influence on the evaporation rate of the solvent in the slurry, and the structure of a dried substance to be obtained by means of spraying and drying can be controlled using the atmosphere temperature.

For example, as the atmosphere temperature approximates to the boiling point of the solvent in the slurry, the time taken to dry sprayed liquid droplets extends, and thus the dried substance to be obtained is sufficiently shrunk during the time required for the drying. Therefore, the dried substance sprayed and dried at the atmosphere temperature near the boiling point of the solvent in the slurry is likely to have a solid structure.

In addition, since the drying time of the sprayed liquid droplets shortens as the atmosphere temperature becomes higher than the boiling point of the solvent in the slurry, the dried substance to be obtained is not capable of sufficiently shrinking. Therefore, the dried substance is likely to have a porous structure or a hollow structure.

Calcination step

In the present step, the granulated body obtained in the above-described step is calcinated in a non-oxidative atmosphere.

First, before calcination, an organic compound which is a carbonaceous film precursor is mixed into the granulated body in a dry manner.

The organic compound is not particularly limited as long as the organic compound is capable of forming the carbonaceous film on the surface of the cathode active material, and examples thereof include polyvinyl alcohol (PVA), polyvinyl pyrrolidone, cellulose, starch, gelatin, carboxymethyl cellulose, methyl cellulose, hydroxymethyl cellulose, hydroxyethyl cellulose, polystyrene sulfonate, polyacrylamide, polyvinyl acetate, glucose, fructose, galactose, mannose, maltose, sucrose, lactose, glycogen, pectin, alginic acid, glucomannan, chitin, hyaluronic acid, chondroitin, agarose, polyethers, divalent alcohols, trivalent alcohols, and the like. However, examples thereof do not include those considered as the organic acid that is used in the above-described granulation step. These organic compounds may be used singly or a mixture of two or more organic compounds may be used.

Regarding the blending ratio between the organic compound and the electrode active material raw material, the weight of carbon obtained from the organic compound is preferably 0.5 parts by mass or more and 2.5 parts by mass or less with respect to 100 parts by mass of an active material that is obtained from the electrode active material raw material. The actual blending amount varies depending on the carbonization amount (the kind of the carbon source or the carbonization conditions) by means of heating and carbonization, but is approximately 0.7 parts by weight to 6 parts by weight.

Next, the mixture obtained by means of the above-described drying and mixing is calcinated in a non-oxidative atmosphere at a temperature of preferably 650°C or higher and 1,000°C or lower and more preferably 700°C or higher and 900°C or lower for 0.1 hours or longer and 40 hours or shorter.

The non-oxidative atmosphere is preferably an atmosphere filled with an inert gas such as nitrogen ($N_2$), argon (Ar), or the like. In a case in which it is necessary to further suppress the oxidation of the mixture, a reducing atmosphere including approximately several percentages by volume of a reducing gas such as hydrogen ($H_2$) is preferred. In addition, for the purpose of removing organic components evaporated in the non-oxidative atmosphere during calcination, a susceptible or burnable gas such as oxygen ($O_2$) may be introduced into the non-oxidative atmosphere.

Here, when the calcination temperature is set to 650°C or higher, it is easy for the organic compound in the mixture to be sufficiently decomposed and reacted, and the organic compound is easily and sufficiently carbonized. As a result, it is easy to prevent the generation of a high-resistance decomposed substance of the organic compound in the obtained particles. Meanwhile, when the calcination temperature is set to 1,000°C or lower, lithium (Li) in the electrode active material raw material is not easily evaporated, and the grain growth of the electrode active material to a size that is equal to or larger than the target size is suppressed. As a result, in a case in which lithium-ion secondary batteries including a cathode including the electrode material of the present embodiment are produced, it is possible to prevent the discharge capacity at a high charge-discharge rate from decreasing, and realize lithium-ion secondary batteries having sufficient charge and discharge rate performance.

Lithium-ion secondary battery

A lithium-ion secondary battery of the present embodiment has a cathode, an anode, and an electrolyte. The cathode has a cathode mixture layer formed using the electrode material, and the volume resistance value of the cathode mixture layer is 5.0 Ω·cm or less.

When the volume resistance value of the cathode mixture layer is greater than 5.0 Ω·cm, there is a concern that the electron conductivity may decrease. The volume resistance value of the cathode mixture layer is preferably 4.8 Ω·cm or less and more preferably 4.5 Ω·cm or less. Meanwhile, the lower limit value of the volume resistance value of the cathode mixture layer is not particularly limited, but is, for example, 0.5 Ω·cm.

In addition, the volume resistance value can be measured using a method described in the examples.

The interface resistance value between the cathode mixture layer and the aluminum current collector is preferably 1 Ω·cm² or less, more preferably 0.8 Ω·cm² or less, still more preferably 0.5 Ω·cm² or less, and far still more preferably 0.1 Ω·cm² or less. When the interface resistance value between the cathode mixture layer and the aluminum current collector is 1 Ω·cm² or less, it is possible to improve the electron conductivity. Meanwhile, the lower limit value of the interface resistance value between the cathode mixture layer and the aluminum current collector is not particularly limited, but is, for example, 0.005 Ω·cm².

In addition, the interface resistance value can be measured using a method described in the examples.

The electrode density of the calendered cathode mixture layer is preferably 1.4 g/cm³ or more and more preferably 1.5 g/cm³ or more. When the electrode density of the calendered cathode mixture layer is 1.4 g/cm³ or more, it is possible to improve electron conductivity. Meanwhile, the upper limit value of the electrode density is not particularly limited, but is, for example, 2.5 g/cm³.

In addition, the electrode density can be measured using a method described in the examples.

Cathode

In order to produce the cathode, the electrode material, a binding agent made of a binder resin, and a solvent are mixed together, thereby preparing a coating material for forming the cathode or paste for forming the cathode. At this time, a conductive auxiliary agent such as carbon black, acetylene black, graphite, Ketjenblack, natural graphite, or artificial graphite may be added thereto as necessary.

As the binding agent, that is, the binder resin, for example, a polytetrafluoroethylene (PTFE) resin, a polyvinylidene fluoride (PVdF) resin, fluorine rubber, or the like is preferably used.

The blending ratio between the electrode material and the binder resin is not particularly limited; however, for example, the amount of the binder resin is set to 1 part by mass to 30 parts by mass and preferably set to 3 parts by mass to 20 parts by mass with respect to 100 parts by mass of the electrode material.

The solvent that is used in the coating material for forming the cathode or the paste for forming the cathode may be appropriately selected depending on the properties of the binder resin.

Examples thereof include water; alcohols such as methanol, ethanol, 1-propanol, 2-propanol (isopropyl alcohol: IPA), butanol, pentanol, hexanol, octanol, and diacetone alcohol; esters such as ethyl acetate, butyl acetate, ethyl lactate, propylene glycol monomethyl ether acetate, propylene glycol monoethyl ether acetate, and γ-butyrolactone; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diethylene glycol monoethyl ether; ketones such as acetone, methyl ethyl ketone (MEK), methyl isobutyl ketone (MIBK), acetylacetone, and cyclohexanone; amides such as dimethyl formamide, N,N-dimethylacetoacetamide, and N-methyl pyrrolidone; glycols such as ethylene glycol, diethylene glycol, and propylene glycol, and the like. These solvents may be used singly, or a mixture of two or more solvents may be used.

Next, the coating material for forming the cathode or the paste for forming the cathode is applied onto one surface of an aluminum foil and is then dried, thereby obtaining an aluminum foil having a coated film made of the mixture of the electrode material and the binder resin formed on one surface.

Next, the coated film is pressed by pressure and is dried, thereby producing a current collector (electrode) having an electrode material layer on one surface of the aluminum foil.

In the above-described manner, it is possible to produce the cathode in which the discharge capacity can be increased by decreasing the direct current resistance.

Anode

Examples of the anode include anodes including a carbon material such as metallic Li, natural graphite, or hard carbon or an anode material such as a Li alloy, $Li_4Ti_5O_{12}$, or $Si(Li_{4.4}Si)$.

Electrolyte

The electrolyte is not particularly limited, but is preferably a non-aqueous electrolyte, and examples thereof include electrolytes obtained by mixing ethylene carbonate (EC) and ethyl methyl carbonate (EMC) so that the volume ratio reaches 1:1 and dissolving lithium hexafluorophosphate ($LiPF_6$) in the obtained solvent mixture so that the concentration reaches 1 mol/dm$^3$.

Separator

The cathode of the present embodiment and the anode of the present embodiment can be made to face each other through a separator. As the separator, it is possible to use, for example, porous propylene.

In addition, instead of the non-aqueous electrolyte and the separator, a solid electrolyte may be used.

In the lithium-ion secondary battery of the present embodiment, since the cathode has the cathode mixture layer formed using the electrode material for a lithium-ion secondary battery of the present embodiment, it is possible to decrease the volume resistance value of the electrode mixture layer and the interface resistance value between the electrode mixture layer and the aluminum current collector and improve the charging and discharging characteristics.

EXAMPLES

Hereinafter, the present invention will be specifically described using examples and comparative examples. Meanwhile, the present invention is not limited to forms described in the examples.

Synthesis of cathode material for lithium-ion secondary battery

Example 1

Lithium phosphate ($Li_3PO_4$) as a Li source and a P source and iron (II) sulfate ($FeSO_4$) as an Fe source were mixed together so that the molar ratio (Li:Fe:P) reached 3:1:1. Furthermore, distilled water for preparation was mixed thereinto, thereby preparing a raw material slurry (600 ml).

Next, this raw material slurry was stored in a pressure-resistant airtight container, was hydrothermally synthesized at 180°C for two hours, and was cooled to room temperature (25°C), thereby obtaining cake-form electrode active material particles which were precipitated in the container. The electrode active material particles were sufficiently cleaned a plurality of times with distilled water, and then the electrode active material particles and distilled water were mixed together so that the concentration of the electrode active material particles reached 60% by mass, thereby preparing a suspended slurry.

The suspended slurry was injected into a sand mill together with zirconia balls having a diameter of 0.1 mm, and a dispersion treatment was carried out with the treatment time of the sand mill adjusted so that the ratio (D90/D10) of the particle diameter (D90) at a cumulative percentage of 90% to the particle diameter (D10) at a cumulative percentage of 10% in the cumulative particle size distribution of the electrode active material particles in the suspended slurry reached two.

Next, an aqueous solution of citric acid which had been adjusted to 30% by mass in advance, which amounted to 1.0% by mass of the electrode active material particles in terms of the solid content of the citric acid, was mixed into the slurry on which the dispersion treatment had been carried out, furthermore, distilled water was mixed therewith so that the concentration of the electrode active material particles in the slurry reached 50% by mass, and then the mixture was sprayed and dried in the atmosphere at 180°C, thereby obtaining a granulated dried substance of the electrode active material particles.

Next, polyvinyl alcohol powder, which amounted to 3.5% by mass of the electrode active material particles, was mixed into the obtained dried substance in a dry manner, and a thermal treatment was carried out at 750°C in an inert atmosphere for one hour so as to support carbon in the electrode active material particles, thereby producing a cathode material for a lithium-ion secondary battery of Example 1.

Example 2

A cathode material for a lithium-ion secondary battery of Example 2 was produced in the same manner as in Example 1 except for the fact that an aqueous solution of citric acid which had been adjusted to 30% by mass in advance, which amounted to 1.0% by mass of the electrode active material particles in terms of the solid content of the citric acid, was mixed into the slurry on which the dispersion treatment had been carried out using the sand mill, and furthermore, distilled water was mixed therewith so that the concentration of the electrode active material particles in the slurry reached 25% by mass.

Example 3

A cathode material for a lithium-ion secondary battery of Example 3 was produced in the same manner as in Example 1 except for the fact that a suspended slurry adjusted so that the concentration of the electrode active material particles reached 60% by mass was injected into the sand mill together with the zirconia balls having a diameter of 1 mm, and a dispersion treatment was carried out with the treatment time of a ball mill adjusted so that the ratio (D90/D10) reached 25 in the electrode active material particles in the suspended slurry.

Example 4

A cathode material for a lithium-ion secondary battery of Example 4 was produced in the same manner as in Example 3 except for the fact that an aqueous solution of citric acid which had been adjusted to 30% by mass in advance, which amounted to 1.0% by mass of the electrode active material particles in terms of the solid content of the citric acid, was mixed into the slurry on which the dispersion treatment had been carried out using the sand mill, and furthermore, distilled water was mixed therewith so that the concentration of the electrode active material particles in the slurry reached 25% by mass.

Example 5

An aqueous solution of citric acid which had been adjusted to 30% by mass in advance, which amounted to 1.0% by mass of the cathode active material particles in terms of the solid content of the citric acid, was mixed into the slurry on which the dispersion treatment had been carried out using the sand mill, furthermore, distilled water was mixed therewith so that the concentration of the cathode active material particles in the slurry reached 50% by mass, and then the mixture was sprayed and dried in the atmosphere at 180°C, thereby obtaining a granulated dried substance of the electrode active material particles.

Next, glucose powder, which amounted to 4.7% by mass of the electrode active material particles, was mixed into the obtained dried substance in a dry manner. Except for the above-described facts, a cathode material for a lithium-ion secondary battery of Example 5 was produced in the same manner as in Example 1.

Example 6

A cathode material for a lithium-ion secondary battery of Example 6 was produced in the same manner as in Example 5 except for the fact that an aqueous solution of citric acid which had been adjusted to 30% by mass in advance, which amounted to 1.0% by mass of the electrode active material particles in terms of the solid content of the citric acid, was mixed into the slurry on which the dispersion treatment had been carried out using the sand mill, and furthermore, distilled water was mixed therewith so that the concentration of the electrode active material particles in the slurry reached 25% by mass.

Comparative Example 1

A cathode material for a lithium-ion secondary battery of Comparative Example 1 was produced in the same manner as in Example 1 except for the fact that an aqueous solution of polyvinyl alcohol which had been adjusted to 15% by mass in advance, which amounted to 3.5% by mass of the electrode active material particles in terms of the solid content of the polyvinyl alcohol, was mixed into the slurry on which the dispersion treatment had been carried out using the sand mill, distilled water was mixed therewith so that the concentration of the electrode active material particles in the slurry reached 50% by mass, and then the mixture was sprayed and dried in the atmosphere at 180°C.

Comparative Example 2

A cathode material for a lithium-ion secondary battery of Comparative Example 2 was produced in the same manner as in Comparative Example 1 except for the fact that an aqueous solution of polyvinyl alcohol which had been adjusted to 15% by mass in advance, which amounted to 3.5% by mass of the electrode active material particles in terms of the solid content of the polyvinyl alcohol, was mixed into the slurry on which the dispersion treatment had been carried out using the sand mill, and distilled water was mixed therewith so that the concentration of the electrode active material particles in the slurry reached 25% by mass.

Comparative Example 3

Cake-form electrode active material particles obtained by means of hydrothermal synthesis were cleaned sufficiently a plurality of times with distilled water, and then the electrode active material particles and distilled water were mixed together so that the concentration of the electrode active material particles reached 60% by mass, thereby preparing a suspended slurry. Next, a cathode material for a lithium-ion secondary battery of Comparative Example 3 was produced in the same manner as in Example 1 except for the fact that the dispersion treatment was not carried out on the suspended slurry and the aqueous solution of citric acid was not mixed therewith.

Comparative Example 4

Cake-form electrode active material particles obtained by means of hydrothermal synthesis were cleaned sufficiently a plurality of times with distilled water, and then the electrode active material particles and distilled water were mixed together so that the concentration of the electrode active material particles reached 60% by mass, thereby preparing a suspended slurry. Next, a cathode material for a lithium-ion secondary battery of Comparative Example 4 was produced in the same manner as in Example 6 except for the fact that the dispersion treatment was not carried out on the suspended slurry and the aqueous solution of citric acid was not mixed therewith.

Evaluation of cathode materials

The obtained cathode materials were evaluated using the following methods. The results are shown in Table 1.

1. Present ratio of spherical secondary particles having degree of circularity of 0.9 or more and 0.95 or less

The cathode active material particles (0.05g) were injected into a 100 ml poly bottle, distilled water (100ml) and one earpick amount of a surfactant (CHARMY GREEN manufactured by Lion Corporation) were injected thereinto, the lid was closed, the bottle was shaken ten times, then, the mixture (2 ml) was extracted using a dropper and injected into a flow-type particle image analyzer (FPIA3000S manufactured by Sysmex Corporation) through the sample injection opening, and the degree of circularity was measured.
Regarding the measurement conditions, a particle sheath was used as the sheath solution, the measurement mode was HPF, the total count of the particles was set to 1,000, and a standard lens was used as the lens.

2. Pore size distribution measurement

Mercury was injected into a cell into which the cathode active material particles (0.2 g) had been injected in a low-pressure mode using a mercury porosimeter (POREMASTER manufactured by Quantachrome Instruments Japan G.K.), and the pore size distribution was measured in a high-pressure mode. Regarding the conditions in the high-pressure mode, the lower limit pressure was set to 20 PSI, and the upper limit pressure was set to 60,000 PSI.

2. Average particle diameter of spherical secondary particles

The average particle diameter of spherical secondary particles was obtained by observing spherical secondary particles using a scanning electron microscope (SEM), arbitrarily selecting 100 spherical secondary particles from the obtained SEM image, measuring the long diameters and short diameters of the respective particles, obtaining the particle diameters using (the long diameter+the short diameter) /2, and computing the average value from these measurement values.

3. Particle diameter (D90) at cumulative percentage of 90% in cumulative particle size distribution

D90 was measured using a laser diffraction particle size distribution measurement instrument (manufactured by Shimadzu Corporation, trade name: SALD-1000).

4. Specific surface area

The specific surface areas of the electrode materials were measured using a specific surface area meter (manufactured by MicrotracBEL Corp., trade name: BELSORP-mini,) and a BET method in which nitrogen ($N_2$) adsorption was used.

5. Oil absorption amount for which

N-methyl-2-pyrrolidinone (NMP) was used (NMP oil absorption amount)

The oil absorption amount for which N-methyl-2-pyrrolidinone (NMP) was used was measured using a method according to JIS K5101-13-1 (refined linseed oil method) and linseed oil instead of NMP.

Production of cathodes

The obtained cathode material, polyvinylidene fluoride (PVdF) as a binder, and acetylene black (AB) as a conductive auxiliary agent were mixed together so that the mass ratio therebetween reached 90:5:5, and furthermore, N-methyl-2-pyrrolidinone (NMP) was added thereto as a solvent so as to impart fluidity, thereby producing a slurry.
Next, this slurry was applied and dried on a 30 $\mu$m-thick aluminum (Al) foil. After that, the product was pressed at a total applied pressure of 5 t/250 mm, thereby producing a cathode for each of the examples and the comparative examples.

Evaluation of cathodes

The obtained cathodes were evaluated using the following methods. The results are shown in Table 1.

6. Electrode density after calendering

The cathode pressed at a total applied pressure of 5 t/250 mm was punched into $\phi$15.9 mm using a coin-type clicking machine.

The thickness of the punched-out cathode was measured at five points, a value obtained by subtracting the thickness of the current collector from the average value thereof was considered as the thickness of the cathode, and the cathode volume was computed. Similarly, the mass of the cathode was computed from the difference in mass between the electrode and the current collector and was divided by the cathode volume, thereby obtaining an electrode density after calendering.

7. Interface resistance value between cathode mixture layer and aluminum current collector

The interface resistance value was measured using an electrode resistance measurement instrument (manufactured by Hioki E.E. Corporation, trade name: XF057-012) under conditions of an applied current value of 1 mA, a voltage range of 0.2 V, and a normal measurement speed. Meanwhile, the voltage range was arbitrarily adjusted in a range in which the resistance value was not overloaded.

8. Volume resistance value of cathode mixture layer

The volume resistance value was measured using an electrode resistance measurement instrument (manufactured by Hioki E.E. Corporation, trade name: XF057-012) under conditions of an applied current value of 1 mA, a voltage range of 0.2 V, and a normal measurement speed. Meanwhile, the voltage range was arbitrarily adjusted in a range in which the resistance value was not overloaded.

Production of lithium-ion secondary batteries

Lithium metal was disposed as an anode with respect to the above-obtained cathode for a lithium-ion secondary battery, and a separator made of porous polypropylene was disposed between the cathode and the anode, thereby producing a member for a battery.

Meanwhile, ethylene carbonate and diethyl carbonate were mixed together in a mass ratio of 1:1, and furthermore, 1 M of a $LiPF_6$ solution was added thereto, thereby producing an electrolyte solution having lithium ion conductivity.

Next, the member for a battery was immersed in the electrolyte solution, thereby producing a lithium-ion secondary battery of each of examples and comparative examples.

Evaluation of lithium-ion secondary batteries

The obtained lithium-ion secondary batteries were evaluated using the following methods. The results are shown in Table 1.

9. Initial discharge capacity

A charge and discharge test of the lithium-ion secondary battery was repeatedly carried out three times at room temperature (25°C) under a constant current at a cut-off voltage of 2.5 V to 3.7 V and a charge and discharge rate of 0.1C (10-hour charge and then 10-hour discharge), and the discharge capacity at the third cycle was considered as the initial discharge capacity.

10. Load characteristics (discharge capacity ratio)

After the initial discharge capacity was measured, as a charge and discharge test of the lithium-ion secondary battery, at room temperature (25°C), the lithium-ion secondary battery was charged at a cut-off voltage of 2.5V to 3.7V and 0.2C (five-hour charge), was discharged at 3C (20-minute discharge), and the discharge capacity was measured.

The ratio between the 3C discharge capacity and the 0.1C discharge capacity (the initial discharge capacity) was considered as the load characteristics, and the load characteristics (the discharge capacity ratio) were computed using the following equation (1).

$$\text{Discharge capacity ratio (\%)} = (\text{3C discharge capacity}/\text{0.1C discharge capacity}) \times 100 \quad \cdots \quad (1)$$

11. Direct current resistance (DCR)

The direct current resistance was measured using a lithium-ion secondary battery in which the depth of charge was adjusted to 50% (SOC 50%) with a constant current at an ambient temperature of 0°C and a charge rate of 0.1 C. In the lithium-ion secondary battery adjusted to SOC 50% at room temperature (25°C), currents were made to flow on the charge side and the discharge side alternatively at rates of 1C, 3C, 5C, and 10C for ten seconds each, the current values and the voltage values after 10 seconds at the respective rates were plotted in the horizontal axis and the vertical axis respectively, and the slopes of the approximate value line obtained using the least square method on the charge side and on the discharge side were considered as "input DCR" and "output DCR" respectively. Meanwhile, at the respective currents, a 10-minute quiescent time was provided whenever the current flow direction or the flowing current was changed.

[Table 1]

| | Content ratio of spherical secondary particles of electrode active material with degree of circularity of 0.90 to 0.95 | Micropore diameter of peak top at 1 μm or less | Average particle diameter of spherical secondary particles | D90 | Specific surface area | NMP adsorption amount | Electrode density | Interface resistance value | Volume resistance value | Interface resistance value/D90 | Volume resistance value/D90 |
|---|---|---|---|---|---|---|---|---|---|---|---|
| | % | μm | μm | μm | m2/g | mL/100g | g/cm3 | $\Omega\cdot cm^2$ | $\Omega\cdot cm$ | | |
| Example 1 | 20 | 0.076 | 6.0 | 12.7 | 12.2 | 40 | 1.57 | 0.50 | 3.2 | 0.039 | 0.252 |
| Example 2 | 22 | 0.091 | 4.2 | 9.9 | 12.3 | 35 | 1.60 | 0.10 | 1.6 | 0.010 | 0.162 |
| Example 3 | 21 | 0.123 | 7.6 | 14.8 | 10.2 | 44 | 1.51 | 0.70 | 4.4 | 0.047 | 0..297 |
| Example 4 | 24 | 0.137 | 3.4 | 8.7 | 10.9 | 33 | 1.53 | 0.05 | 1.2 | 0.006 | 0.138 |
| Example 5 | 25 | 0.073 | 3.4 | 8.2 | 13.2 | 39 | 1.60 | 0.09 | 1.4 | 0.011 | 0.171 |
| Example 6 | 30 | 0.089 | 3.4 | 8.2 | 15.0 | 29 | 1.66 | 0.04 | 1.0 | 0.005 | 0.122 |
| Comparative Example 1 | 16 | 0.153 | 12.3 | 23.4 | 11.6 | 72 | 1.16 | 3.50 | 8.5 | 0.150 | 0.363 |
| Comparative Example 2 | 15 | 0.167 | 8.4 | 19.2 | 11.6 | 65 | 1.21 | 2.70 | 7.5 | 0.141 | 0391 |
| Comparative Example 3 | 17 | 0.354 | 8.4 | 19.1 | 7.8 | 64 | 1.20 | 2.10 | 7.5 | 0.110 | 0.393 |
| Comparative Example 4 | 16 | 0.366 | 8.0 | 17.7 | 8.9 | 57 | 1.29 | 1.60 | 6.2 | 0.090 | 0.350 |

[Table 2]

|  | Initial discharge capacity | Load characteristics | Input DCR | Output DCR |
|---|---|---|---|---|
|  | mAh/g | % | Ω | Ω |
| Example 1 | 138 | 96.8 | 3.1 | 2.7 |
| Example 2 | 140 | 97.1 | 2.6 | 2.6 |
| Example 3 | 135 | 93.9 | 3.2 | 2.8 |
| Example 4 | 137 | 96.6 | 3.1 | 2.8 |
| Example 5 | 138 | 97.4 | 2.8 | 2.7 |
| Example 6 | 140 | 96.8 | 2.6 | 2.5 |
| Comparative Example 1 | 126 | 80.3 | 6.2 | 3.4 |
| Comparative Example 2 | 126 | 80.7 | 4.7 | 3.4 |
| Comparative Example 3 | 123 | 75 .7 | 7.6 | 4.2 |
| Comparative Example 4 | 125 | 77.2 | 6.2 | 4.5 |

Summary of results

When Examples 1 to 6 and Comparative Examples 1 to 4 were compared with one another using the results in Table 1 and Table 2, it could be confirmed that the cathodes for a lithium-ion secondary battery of Examples 1 to 6 had a low interface resistance value between the cathode mixture layer and the aluminum current collector and a low volume resistance value of the cathode mixture layer. In addition, it could be confirmed that the lithium-ion secondary batteries of Examples 1 to 6 had a low direct current resistance, an excellent initial discharge capacity, and excellent load characteristics. Therefore, it was found that, when the electrode material for a lithium-ion secondary battery including the electrode active material made of the transition metal lithium phosphate compound having an olivine structure and the carbonaceous film that coats the electrode active material, in which the specif ic surface area of the electrode active material is 10 $m^2$/g or more and 25 $m^2$/g or less, the average particle diameter of spherical secondary particles formed by granulating primary particles of the electrode active material is 0.5 $\mu$m or more and 15 $\mu$m or less, and, regarding the content of spherical secondary particles having a degree of circularity, which is measured using a flow-type particle image analyzer, in a range of 0.90 or more and 0.95 or less, the proportion of the number of the spherical secondary particles in the total number of all of single particles and spherical secondary particles present during the measurement of the degree of circularity is 18% or more is used, it is possible to obtain lithium-ion secondary batteries having a low interface resistance value between the cathode mixture layer and the aluminum current collector and a low volume resistance value of the cathode mixture layer. Furthermore, it was also found that, when the electrode material for a lithium-ion secondary battery is used, it is possible to obtain lithium-ion secondary batteries having a low direct current resistance value, an excellent initial discharge capacity, and excellent load characteristics.

**Claims**

1.  An electrode material for a lithium-ion secondary battery comprising:

    an electrode active material made of a transition metal lithium phosphate compound having an olivine structure; and
    a carbonaceous film that coats the electrode active material,
    wherein a specific surface area of the electrode active material is 10 $m^2$/g or more and 25 $m^2$/g or less,
    an average particle diameter of spherical secondary particles formed by granulating primary particles of the electrode active material is 0.5 $\mu$m or more and 15 $\mu$m or less,
    regarding a content of spherical secondary particles having a degree of circularity, which is measured using a flow-type particle image analyzer, in a range of 0.90 or more and 0.95 or less, a proportion of the number of the spherical secondary particles in the total number of all of single particles and spherical secondary particles present during the measurement of the degree of circularity is 18% or more, and
    wherein, among peaks appearing at 1 $\mu$m or less in a pore size distribution chart of the electrode active material measured using a mercury porosimeter, a micropore diameter of a peak top of a peak having the largest pore volume is 0.03 $\mu$m or more and 0.14 $\mu$m or less.

2. The electrode material for a lithium-ion secondary battery according to Claim 1,
wherein the transition metal lithium phosphate compound having an olivine structure is an electrode active material represented by General Formula (1),

$$Li_xA_yD_zPO_4 \qquad (1)$$

wherein A represents at least one element selected from the group consisting of Co, Mn, Ni, Fe, Cu, and Cr, D represents at least one element selected from the group consisting of Mg, Ca, Sr, Ba, Ti, Zn, B, Al, Ga, In, Si, Ge, Sc, and Y, $0.9 < x < 1.1$, $0 < y \leq 1$, $0 \leq z < 1$, and $0.9 < y + z < 1.1$.

3. The electrode material for a lithium-ion secondary battery according to Claim 1 or 2,
wherein, in a case in which a cathode mixture layer including the electrode material, a conductive auxiliary agent, and a binding agent in a weight ratio (the electrode material:the conductive auxiliary agent:the binding agent) of 90:5:5 is calendered on a 30 $\mu$m-thick aluminum current collector at a total applied pressure of 5 t/250 mm, an interface resistance value between the calendered cathode mixture layer and the aluminum current collector is 1 $\Omega \cdot cm^2$ or less, and a volume resistance value of the calendered cathode mixture layer is 5.0 $\Omega \cdot cm$ or less.

4. The electrode material for a lithium-ion secondary battery according to Claim 3,

wherein a particle diameter (D90) at which a cumulative percentage of the electrode material is 90% in a cumulative particle size distribution is 15 $\mu$m or less, and
in a case in which the cathode mixture layer including the electrode material, the conductive auxiliary agent, and the binding agent in a weight ratio (the electrode material:the conductive auxiliary agent:the binding agent) of 90:5:5 is calendered on the 30 $\mu$m-thick aluminum current collector at a total applied pressure of 5 t/250 mm, a ratio (the interface resistance value/D90) of the interface resistance value between the calendered cathode mixture layer and the aluminum current collector to the D90 is 0.1 $\Omega \cdot cm^2/\mu m$ or less, and a ratio (the volume resistance value/D90) of the volume resistance value of the calendered cathode mixture layer to the D90 is 0.10 $\Omega \cdot cm/\mu m$ or more and 0.60 $\Omega \cdot cm/\mu m$ or less.

5. The electrode material for a lithium-ion secondary battery according to Claim 3 or 4,
wherein an oil absorption amount of the electrode material, for which N-methyl-2-pyrrolidone is used, is 50 ml/100g or less.

6. The electrode material for a lithium-ion secondary battery according to any of Claims 3 to 5,
wherein, in a case in which the cathode mixture layer including the electrode material, the conductive auxiliary agent, and the binding agent in a weight ratio (the electrode material: the conductive auxiliary agent:the binding agent) of 90:5:5 is calendered on the 30 $\mu$m-thick aluminum current collector at a total applied pressure of 5 t/250 mm, an electrode density of the calendered cathode mixture layer is 1.4 $g/cm^3$ or more.

7. A lithium-ion secondary battery comprising:

a cathode;
an anode; and
an electrolyte,
wherein the cathode includes a cathode mixture layer formed using the electrode material according to any of Claims 1 to 6, and
a volume resistance value of the cathode mixture layer is 5.0 $\Omega \cdot cm$ or less.

8. The lithium-ion secondary battery according to Claim 7,
wherein an electrode density of the calendered cathode mixture layer is 1.4 $g/cm^3$ or more.

**Patentansprüche**

1. Elektrodenmaterial für einen Lithiumionenakkumulator, umfassend:

ein aktives Elektrodenmaterial, hergestellt aus einer Übergangsmetalllithiumphosphatverbindung mit einer Olivinstruktur; und

einen kohlenstoffhaltigen Film, der das aktive Elektrodenmaterial beschichtet, wobei eine spezifische Oberfläche des aktiven Elektrodenmaterials 10 $m^2/g$ oder mehr und 25 $m^2/g$ oder weniger beträgt,

ein durchschnittlicher Teilchendurchmesser von kugelförmigen Sekundärteilchen, gebildet durch Granulieren von Primärteilchen des aktiven Elektrodenmaterials, 0,5 $\mu$m oder mehr und 15 $\mu$m oder weniger beträgt, bezüglich eines Gehalts an kugelförmigen Sekundärteilchen mit einem Grad der Zirkularität, der unter Verwendung eines Teilchenbildanalysators vom Strömungstyp gemessen wird, in einem Bereich von 0,90 oder mehr und 0,95 oder weniger, ein Anteil der Zahl der kugelförmigen Sekundärteilchen an der Gesamtzahl aller einzelnen Teilchen und kugelförmigen Sekundärteilchen, die während der Messung des Grad der Zirkularität vorhanden sind, 18% oder mehr beträgt, und

wobei unter den Peaks, die bei 1 $\mu$m oder weniger in einem Porengrößenverteilungsdiagramm des aktiven Elektrodenmaterials, gemessen mit einem Quecksilberporosimeter, auftreten, ein Mikroporendurchmesser einer Peakspitze eines Peaks mit dem größten Porenvolumen 0,03 $\mu$m oder mehr und 0,14 $\mu$m oder weniger beträgt.

2. Elektrodenmaterial für einen Lithiumionenakkumulator nach Anspruch 1, wobei die Übergangsmetalllithiumphosphatverbindung mit einer Olivinstruktur ein aktives Elektrodenmaterial, dargestellt durch die allgemeinen Formel (1), ist,

$$Li_xA_yD_zPO_4 \qquad (1)$$

wobei A mindestens ein Element, ausgewählt aus der Gruppe, bestehend aus Co, Mn, Ni, Fe, Cu und Cr, darstellt, D mindestens ein Element, ausgewählt aus der Gruppe, bestehend aus Mg, Ca, Sr, Ba, Ti, Zn, B, Al, Ga, In, Si, Ge, Sc und Y, darstellt, $0,9<x<1,1$, $0<y\leq1$, $0\leq z<1$ und $0,9<y+z<1,1$,

3. Elektrodenmaterial für einen Lithiumionenakkumulator nach Anspruch 1 oder 2, wobei in einem Fall, in dem eine Kathodengemischschicht, die das Elektrodenmaterial, ein leitfähiges Hilfsmittel und ein Bindemittel in einem Gewichtsverhältnis (das Elektrodenmaterial : das leitfähige Hilfsmittel : das Bindemittel) von 90:5:5 einschließt, auf einem 30 $\mu$m dicken Aluminiumstromabnehmer bei einem Gesamtanwendungsdruck von 5 t/250 mm kalandriert wird, ein Grenzflächenwiderstandswert zwischen der kalandrierten Kathodengemischschicht und dem Aluminiumstromabnehmer 1 $\Omega \cdot cm^2$ oder weniger beträgt und ein Volumenwiderstandswert der kalandrierten Kathodengemischschicht 5,0 $\Omega \cdot cm$ oder weniger beträgt.

4. Elektrodenmaterial für einen Lithiumionenakkumulator nach Anspruch 3, wobei ein Teilchendurchmesser (D90), bei dem ein kumulativer Prozentsatz des Elektrodenmaterials 90% in einer kumulativen Teilchengrößenverteilung beträgt, 15 $\mu$m oder weniger beträgt und in einem Fall, in dem die Kathodengemischschicht, die das Elektrodenmaterial, das leitfähige Hilfsmittel und das Bindemittel in einem Gewichtsverhältnis (das Elektrodenmaterial : das leitfähige Hilfsmittel : das Bindemittel) von 90:5:5 einschließt, auf den 30 $\mu$m dicken Aluminiumstromabnehmer bei einem Gesamtanwendungsdruck von 5 t/250 mm kalandriert wird, ein Verhältnis (der Grenzflächenwiderstandswert/D90) des Grenzflächenwiderstandswertes zwischen der kalandrierten Kathodengemischschicht und dem Aluminiumstromabnehmer zu dem D90 0,1 $\Omega \cdot cm^2/\mu m$ oder weniger beträgt und ein Verhältnis (der Volumenwiderstandswert/D90) des Volumenwiderstandswerts der kalandrierten Kathodengemischschicht zu dem D90 0,10 $\Omega \cdot cm/\mu m$ oder mehr und 0,60 $\Omega \cdot cm/\mu m$ oder weniger beträgt.

5. Elektrodenmaterial für einen Lithiumionenakkumulator nach Anspruch 3 oder 4, wobei eine Ölabsorptionsmenge des Elektrodenmaterials, für das N-Methyl-2-pyrrolidon verwendet wird, 50 ml/100g oder weniger beträgt.

6. Elektrodenmaterial für einen Lithiumionenakkumulator nach einem der Ansprüche 3 bis 5, wobei in einem Fall, in dem die Kathodengemischschicht, die das Elektrodenmaterial, das leitfähige Hilfsmittel und das Bindemittel in einem Gewichtsverhältnis (das Elektrodenmaterial : das leitfähige Hilfsmittel : das Bindemittel) von 90:5:5 einschließt, auf den 30 $\mu$m dicken Aluminiumstromabnehmer bei einem Gesamtanwendungsdruck von 5 t/250 mm kalandriert wird, eine Elektrodendichte der kalandrierten Kathodengemischschicht 1,4 $g/cm^3$ oder mehr beträgt.

7. Lithiumionenakkumulator, umfassend:

eine Kathode;
eine Anode; und
ein Elektrolyt,
wobei die Kathode eine Kathodengemischschicht, gebildet unter Verwendung des Elektrodenmaterials nach einem der Ansprüche 1 bis 6, einschließt und ein Volumenwiderstandswert der Kathodengemischschicht 5,0 $\Omega \cdot$cm oder weniger beträgt.

**8.** Lithiumionenakkumulator nach Anspruch 7,
wobei eine Elektrodendichte der kalandrierten Kathodengemischschicht 1,4 g/cm$^3$ oder mehr beträgt.

**Revendications**

**1.** Matériau d'électrode pour batterie secondaire aux ions lithium comprenant:

un matériau actif d'électrode constitué d'un composé lithium phosphate de métal de transition avec une structure olivine; et
un film carboné qui enrobe le matériau actif d'électrode,
dans lequel la surface spécifique du matériau actif d'électrode est de 10 m$^2$/g ou plus et de 25 m2/g ou moins,
le diamètre particulaire moyen des particules secondaires sphériques formées par granulation des particules primaires du matériau actif d'électrode est de 0,5 $\mu$m ou plus et de 15 $\mu$m ou moins,
concernant la teneur en particules secondaires sphériques avec un degré de circularité, lequel est mesuré en utilisant un analyseur d'image de particules débitmétrique, dans une plage de 0,90 ou plus et de 0,95 ou moins,
la proportion du nombre de particules secondaires sphériques dans le nombre total de chacune de toutes les particules et des particules secondaires sphériques présentes pendant la mesure du degré de circularité, est de 18% ou plus, et
dans lequel, parmi les pics apparaissant à 1 $\mu$m ou moins dans un tableau de distribution des dimension de pores du matériau actif d'électrode mesurée en utilisant un porosimètre à mercure, le diamètre des microporesd'un sommet de pic d'un pic avec le volume le plus grand de pores, est 0,03 $\mu$m ou plus et 0,14 $\mu$m ou moins.

**2.** Matériau d'électrode pour batterie secondaire aux ions lithium selon la revendication 1,
dans lequel le composé lithium phosphate de métal de transition avec une structure olivine est un matériau actif d'électrode représenté par la formule générale (1),

$$Li_xA_yD_zPO_4 \qquad (1)$$

dans laquelle A représente au moins un élément sélectionné parmi le groupe consistant en Co, Mn, Ni, Fe, Cu et Cr, D représente au moins un élément sélectionné parmi le groupe consistant en Mg, Ca, Sr, Ba, Ti, Zn, B, Al, Ga, In, Si, Ge, Sc et Y, $0,9 < x < 1,1$, $0 < y \leq 1$, $0 \leq z < 1$ et $0,9 < y+z < 1,1$.

**3.** Matériau d'électrode pour batterie secondaire aux ions lithium selon la revendication 1 ou 2,
dans lequel, dans le cas où une couche de mélange de cathode comprenant le matériau d'électrode, un agent auxiliaire conducteur et un agent de liaison dans un rapport pondéral (matériau d'électrode:agent auxiliaire conducteur:agent de liaison) de 90:5:5 est calandrée sur un collecteur de courant en aluminium de 30 $\mu$m d'épaisseur à une pression appliquée totale de 5 t/250 mm, la valeur de résistance d'interface entre la couche de mélange de cathode calandrée et le collecteur de courant en aluminium est 1 $\Omega \cdot$cm$^2$ ou moins, et la valeur de résistance de volume de la couche de mélange de cathode calandrée est de 5,0 $\Omega \cdot$cm ou moins.

**4.** Matériau d'électrode pour batterie secondaire aux ions lithium selon la revendication 3,
dans lequel le diamètre particulaire (D90) auquel un pourcent cumulatif du matériau d'électrode est de 90% dans une distribution de granulométrie cumulative est de 15 $\mu$m ou moins, et
dans le cas où la couche de mélange de cathode comprenant le matériau d'électrode, l'agent auxiliaire conducteur et l'agent de liaison dans un rapport pondéral (matériau d'électrode:agent auxiliaire conducteur:agent de liaison) de 90:5:5 est calandrée sur collecteur de courant en aluminium de 30 $\mu$m d'épaisseur à une pression appliquée totale de 5 T/250 mm, le rapport (valeur de résistance d'interface/D90) de la valeur de résistance d'interface entre la couche de mélange de cathode calandrée et le collecteur de courant en aluminium au D90 est 0,1 $\Omega \cdot$cm$^2$/$\mu$m ou moins et le rapport (valeur de résistance de volume/D90) de la valeur de résistance de volume de la couche de mélange de cathode calandrée au D90 est de 0,10 $\Omega \cdot$cm/$\mu$m ou plus et 0,60 $\Omega \cdot$cm/$\mu$m ou moins.

**5.** Matériau d'électrode pour batterie secondaire aux ions lithium selon la revendication 3 ou 4, dans lequel la quantité d'absorption d'huile du matériau d'électrode, pour laquelle on utilise la N-méthyl-2-pyrrolidone, est de 50 ml/100g ou moins.

**6.** Matériau d'électrode pour batterie secondaire aux ions lithium selon l'une quelconque des revendications 3 à 5, dans lequel, dans le cas où la couche de mélange de cathode comprenant le matériau d'électrode, l'agent auxiliaire conducteur et l'agent de liaison dans un rapport pondéral (matériau d'électrode: agent auxiliaire conducteur:agent de liaison) de 90:5:5 est calandrée sur collecteur de courant en aluminium de 30 $\mu$m d'épaisseur à une pression appliquée totale de 5 T/250 mm, la densité d'électrode de la couche de mélange de cathode calandrée est de 1,4 g/cm$^3$ ou plus.

**7.** Batterie secondaire aux ions lithium, comprenant:

une cathode;
une anode; et
un électrolyte,
dans laquelle la cathode comprend une couche de mélange de cathode formée en utilisant le matériau d'électrode selon l'une quelconque des revendications 1 à 6, et
la valeur de résistance de volume de la couche de mélange de cathode est de 5,0 $\Omega\cdot$cm ou moins.

**8.** Batterie secondaire aux ions lithium selon la revendication 7, dans laquelle la densité d'électrode de la couche de mélange de cathode calandrée est de 1,4 g/cm$^3$ ou plus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5343347 B
- JP 2015018678 A
- US 2015380734 A
- US 2013224595 A
- EP 2778126 A